# EUROPEAN PATENT SPECIFICATION

(11) **EP 0 879 266 B1**
(45) Date of publication and mention of the grant of the patent: **17.05.2000**
(21) Application number: 96939197.8
(22) Date of filing: 21.11.1996
(51) Int. Cl.: C09C 1/00, C09B 67/00, B01J 2/30, C09C 3/00

(54) **PIGMENTS ADMIXED WITH LUBRICATING AGENTS**
MIT SCHMIERMITTEL GEMISCHTE PIGMENTE
PIGMENTS MELANGES A DES AGENTS LUBRIFIANTS

(30) Priority: 23.11.1995 GB 9524009; 02.10.1996 GB 9620570
(43) Date of publication of application: 25.11.1998
(73) Proprietor: Pepper, Andrew David, Calverton, Nottinghamshire NG14 6PT (GB)
(72) Inventor: Pepper, Andrew David, Calverton, Nottinghamshire NG14 6PT (GB)
(74) Representative: Jones, Stephen Anthony
(86) International application number: GB9602881
(87) International publication number: WO9720892

(56) References cited:
- EP-A- 0 573 150
- DE-A- 3 021 115
- DE-A- 4 331 057
- FR-A- 1 555 348
- FR-A- 2 134 000
- FR-A- 2 197 953
- US-A- 4 202 438
- US-A- 4 299 635
- PATENT ABSTRACTS OF JAPAN vol. 10, no. 276 (C-373), 10 September 1986 & JP 61 097133 A (MITSUBISHI METAL), 15 May 1986,
- DATABASE WPI Week 9510 Derwent Publications Ltd., London, GB; AN 95-070490 XP002026981 & JP 06 345 995 A (HAMAGUCHI SENKO) , 20 December 1994
- DATABASE WPI Week 7906 Derwent Publications Ltd., London, GB; AN 79-10648b XP002027552 & JP 53 147 541 A (RICOH K.K.) , 22 December 1978
- DATABASE WPI Week 8430 Derwent Publications Ltd., London, GB; AN 84-183146 XP002027553 & DD 208 248 A (VEB ROBOTRON-BUEROM) , 28 March 1984
- DATABASE WPI Week 8848 Derwent Publications Ltd., London, GB; AN 88-343567 XP002027554 & JP 63 257 764 A (HITACHI METAL K.K.) , 25 October 1988
- DATABASE WPI Week 8327 Derwent Publications Ltd., London, GB; AN 83-702336 XP002035960 & JP 58 088 756 A (CANON) , 26 May 1983
- DATABASE WPI Week 7824 Derwent Publications Ltd., London, GB; AN 78-43023a XP002035961 & JP 53 050 057 A (SAKAI CHEMICAL IND.) , 8 May 1978

## Description

This invention relates to improvements in pigments.

Powdered pigments are widely used in many industries. An important class of pigments are iron oxide pigments which are extensively used in the manufacture of building materials and components, eg coloured tarmac, paving blocks etc.

Such pigments are conventionally supplied in so-called "big bags" or 25kg bags, which are emptied into hoppers prior to use. The pigments are mixed with the other constituents of the material being manufactured in a mechanical mixing device to which weighed quantities of the pigment must be conveyed.

It is frequently difficult to convey the pigment to the mixing device, inter alia since the latter may be at a remote and/or inaccessible location in the plant. A further problem is that conveying of the fine powder pigment may result in the production of substantial quantities of dust. This may result in colour contamination of different products, as well as representing a considerable hazard to personnel operating the plant. One approach which has been tried in an attempt to solve this problem is granulation of the pigment (ie agglomeration of the pigment particles to form larger aggregates). However, this approach adds very significantly to the cost of the pigment.

There have now been devised improvements to pigments which overcome or substantially mitigate the disadvantages associated with the prior art.

According to a first aspect of the present invention, there is provided a pigment composition comprising a particulate pigment in admixture with a lubricating agent, wherein the lubricating agent comprises a particulate silica and a particulate aluminosilicate.

The composition according to the invention is advantageous primarily in that the lubricating agent improves the transport properties of the pigment, enabling it to be mechanically conveyed without generating significant quantities of dust. Certain lubricating agents may also, when used with pigments for cementitious products, offer the advantage of enhancing the physical properties of the finished, concrete-like products.

The pigment is preferably an iron oxide pigment which, apart from the addition of the lubricating agent, may be conventional. Such pigments are available in a range of colours widely used in the manufacture of building materials.

The pigment composition may be vacuum- or air-conveyed.

A particularly preferred particulate silica is that sold under the trade name NEOSYL AC by Crosfield Limited of Warrington, Cheshire, England. A particularly preferred aluminosilicate is the hydrated amorphous sodium aluminosilicate sold by the same company under the trade name ALUSIL ET.

The lubricating agents may be mixed with the pigment simultaneously or sequentially. In the case of a combination of a particulate silica and a particulate aluminosilicate, the pigment is preferably first mixed with the silica and then with the aluminosilicate.

Particulate lubricating agents used in the invention preferably have mean particle sizes of the order of, or less than, 100µm.

Preferably, the pigment composition contains less than 5% by weight of lubricating agent, preferably about 2% to 5% by weight, eg about 3% to 4% by weight.

As described above, the pigment compositions according to the invention are advantageous in that they may be conveyed without the generation of substantial quantities of dust.

The invention will now be described in greater detail, by way of example only, with reference to the accompanying Example.

### Example 1

| | |
|---|---|
| Particulate amorphous silica (NEOSYL AC) | 0.5% |
| Hydrated amorphous sodium aluminosilicate (ALUSIL ET) | 3.0% |
| Iron oxide pigment | 96.5% |

## Claims

1. A pigment composition comprising a particulate pigment in admixture with a lubricating agent, wherein the lubricating agent comprises a particulate silica and a particulate aluminosilicate.

2. A pigment composition as claimed in claim 1, wherein the pigment is an iron oxide pigment.

3. A pigment composition as claimed in claim 1 or claim 2, wherein the lubricating agent comprises particulate modified microsilica.

4. A pigment composition as claimed in any preceding claim, which contains 0.5% by weight silica and 3.0% by weight aluminosilicate.

5. A pigment composition as claimed in any preceding claim, wherein the lubricating agent has a mean particle size of the order of, or less than, 100µm.

6. A pigment composition as claimed in any preceding claim, wherein the pigment composition contains less than 5% by weight of lubricating agent.

7. A method of manufacturing a pigment composition as claimed in any preceding claim, which method comprises mixing the particulate pigment with the particulate silica and then with the particulate aluminosilicate.

## Patentansprüche

1. Pigmentzusammensetzung, die ein teilchenförmiges Pigment in Mischung mit einem Gleitmittel umfaßt, wobei das Gleitmittel ein teilchenförmiges Siliciumdioxid und ein teilchenförmiges Aluminosilicat umfaßt.

2. Pigmentzusammensetzung nach Anspruch 1, wobei das Pigment ein Eisenoxidpigment ist.

3. Pigmentzusammensetzung nach Anspruch 1 oder Anspruch 2, wobei das Gleitmittel teilchenförmiges modifiziertes Mikro-Siliciumdioxid umfaßt.

4. Pigmentzusammensetzung nach einem der vorhergehenden Ansprüche, die 0,5 Gew.-% Siliciumdioxid und 3,0 Gew.-% Aluminosilicat enthält.

5. Pigmentzusammensetzung nach einem der vorhergehenden Ansprüche, in der das Gleitmittel eine mittlere Teilchengröße einer Größenordnung von 100 µm oder weniger aufweist.

6. Pigmentzusammensetzung nach einem der vorhergehenden Ansprüche, wobei die Pigmentzusammensetzung weniger als 5 Gew.-% Gleitmittel enthält.

7. Methode für die Herstellung einer Pigmentzusammensetzung nach einem der vorhergehenden Ansprüche, wobei die Methode das Mischen des teilchenförmigen Pigments mit dem teilchenförmigen Siliciumdioxid und daraufhin mit dem teilchenförmigen Aluminosilicat umfaßt.

## Revendications

1. Composition de pigment comprenant un pigment particulaire en mélange avec un agent de lubrification, dans laquelle l'agent de lubrification comprend une silice particulaire et un aluminosilicate particulaire.

2. Composition de pigment selon la revendication 1, dans laquelle le pigment est un pigment d'oxyde de fer.

3. Composition de pigment selon la revendication 1 ou 2, dans laquelle l'agent de lubrification comprend de la microsilice modifiée particulaire.

4. Composition de pigment selon l'une quelconque des revendications précédentes, qui contient 0,5% en poids de silice et 3,0% en poids d'aluminosilicate.

5. Composition de pigment selon l'une quelconque des revendications précédentes, dans laquelle l'agent de lubrification possède une granulométrie moyenne de l'ordre de ou inférieure à 100 µm.

6. Composition de pigment selon l'une quelconque des revendications précédentes, dans laquelle la composition de pigment contient l'agent de lubrification à concurrence de moins de 5% en poids.

7. Procédé de préparation d'une composition de pigment selon l'une quelconque des revendications précédentes, ledit procédé comprenant le fait de mélanger le pigment particulaire avec la silice particulaire, puis avec l'aluminosilicate particulaire.
